# EUROPEAN PATENT APPLICATION

(11) **EP 2 631 685 A2**
(43) Date of publication of application: **28.08.2013**
(21) Application number: 13156433.8
(22) Date of filing: 22.02.2013
(51) Int. Cl.: G01V 99/00

(54) **Building faulted grids for a sedimentary basin including structural and stratigraphic interfaces**

(30) Priority: 22.02.2012 FR 1251621; 21.02.2013 US 201313772820
(71) Applicant: Service Pétroliers Schlumberger, 75007 Paris (FR)
(72) Inventor: Souche, Laurent Arnaud, 75007 PARIS (FR)
(74) Representative: Giovannini, Francesca

(57) **Abstract**

A method including: providing, in a computational space coordinate system, an initial, at least vertically structured, multidimensional grid that includes initial nodes that define grid cells (920); referencing a conformal mesh to identify a set of grid cells of the grid traversed by a fault (930); rasterizing the fault within the grid along the identified set of grid cells to split the grid along the rasterized fault into first side grid cells and second side grid cells (940); altering the grid by projecting nodes from the first side grid cells to a first side of the fault and projecting nodes from the second side grid cells to the second side of the fault (950); and transforming the altered grid to generate, in the real space coordinate system, a transformed grid (960).

## Description

### BACKGROUND

Phenomena associated with a sedimentary basin may be modeled using various equations. For application of a numerical technique, such equations may be discretized using a grid that includes nodes, cells, etc. Where a basin includes various types of features (e.g., stratigraphic layers, faults, etc.), nodes, cells, etc., of a grid may represent, or be assigned to, such features. In turn, discretized equations may better represent the basin and its features. Various technologies, techniques, etc., described herein pertain to grids.

### SUMMARY

A method can include providing, in a computational space coordinate system, an initial, at least vertically structured, multidimensional grid that includes initial nodes that define grid cells; referencing a conformal mesh to identify a set of grid cells of the grid traversed by a fault; rasterizing the fault within the grid along the identified set of grid cells to split the grid along the rasterized fault into first side grid cells and second side grid cells; altering the grid by projecting nodes from the first side grid cells to a first side of the fault and projecting nodes from the second side grid cells to the second side of the fault; and transforming the altered grid to generate, in the real space coordinate system, a transformed grid. One or more computer-readable storage media can include computer-executable instructions to instruct a computing device to: access, in a real space coordinate system, a conformal mesh, conformal to a fault of a geological model, where the conformal mesh includes computational space coordinates associated with a computational space coordinate system; create, in the computational space coordinate system, an initial, at least vertically structured, multidimensional grid that includes initial nodes that define grid cells; reference the conformal mesh to identify a set of grid cells of the grid traversed by the fault; rasterize the fault within the grid along the identified set of grid cells to split the grid along the rasterized fault into first side grid cells and second side grid cells; alter the grid by projecting nodes from the first side grid cells to a first side of the fault and projecting nodes from the second side grid cells to the second side of the fault; and transform the altered grid to generate, in the real space coordinate system, a transformed grid. A system can include a processor; memory operatively coupled to the processor; and one or more modules stored in the memory that include instructions to instruct the processor to: access, in a real space coordinate system, a conformal mesh, conformal to a fault of a geological model, where the conformal mesh includes computational space coordinates associated with a computational space coordinate system; create, in the computational space coordinate system, an initial, at least vertically structured, multidimensional grid that includes initial nodes that define grid cells; reference the conformal mesh to identify a set of grid cells of the grid traversed by the fault; rasterize the fault within the grid along the identified set of grid cells to split the grid along the rasterized fault into first side grid cells and second side grid cells; alter the grid by projecting nodes from the first side grid cells to a first side of the fault and projecting nodes from the second side grid cells to the second side of the fault; and transform the altered grid to generate, in the real space coordinate system, a transformed grid. Various other apparatuses, systems, methods, etc., are also disclosed.

This summary is provided to introduce a selection of concepts that are further described below in the detailed description. This summary is not intended to identify key or essential features of the claimed subject matter, nor is it intended to be used as an aid in limiting the scope of the claimed subject matter.

### BRIEF DESCRIPTION OF THE DRAWINGS

Features and advantages of the described implementations can be more readily understood by reference to the following description taken in conjunction with the accompanying drawings.

Fig. 1 illustrates an example system that includes various components for simulating a geological environment;

Fig. 2 illustrates examples of grids;

Fig. 3 illustrates an example of a system and an example of a method;

Fig. 4 illustrates an example of a method;

Fig. 5 illustrates an example of a geological model and an example of a mesh in a real space;

Fig. 6 illustrates an example of stratigraphic units in a computational space and an example of initial grid cells in a computational space;

Fig. 7 illustrates an example of a model in a real space and an example of a model in a computational space;

Fig. 8 illustrates an example of a grid in a computational space and an example of a grid in a real space;

Fig. 9 illustrates an example of a method; and

Fig. 10 illustrates example components of a system and a networked system.

### DETAILED DESCRIPTION

The following description includes the best mode presently contemplated for practicing the described implementations. This description is not to be taken in a limiting sense, but rather is made merely for the purpose of describing the general principles of the implementations. The scope of the described implementations should be ascertained with reference to the issued claims.

Phenomena associated with a sedimentary basin (e.g., a subsurface region, whether below a ground surface, water surface, etc.) may be modeled using various equations (e.g., stress, fluid flow, phase, etc.). As an example, a numerical model of a basin may find use for understanding various processes related to exploration and production of natural resources (estimating reserves in place, drilling wells, forecasting production, etc.).

For application of a numerical technique, equations may be discretized using a grid that includes nodes, cells, etc. For example, a numerical technique such as the finite difference method can include discretizing a 1 D differential heat equation for temperature with respect to a spatial coordinate to approximate temperature derivatives (e.g., first order, second order, etc.). Where time is of interest, a derivative of temperature with respect to time may also be provided. As to the spatial coordinate, the numerical technique may rely on a spatial grid that includes various nodes where a temperature will be provided for each node upon solving the heat equation (e.g., subject to boundary conditions, generation terms, etc.). Such an example may apply to multiple dimensions in space (e.g., where discretization is applied to the multiple dimensions). Thus, a grid may discretize a volume of interest (VOI) into elementary elements (e.g., cells or grid blocks) that may be assigned or associated with properties (e.g. porosity, rock type, etc.), which may be germane to simulation of physical processes (e.g., fluid flow, reservoir compaction, etc.).

As another example of a numerical technique, consider the finite element method where space may be represented by one dimensional or multidimensional "elements". For one spatial dimension, an element may be represented by two nodes positioned along a spatial coordinate. For multiple spatial dimensions, an element may include any number of nodes. Further, some equations may be represented by all nodes while others are represented by fewer than all nodes (e.g., consider an example for the Navier-Stokes equations where fewer than all nodes represent pressure). The finite element method may include providing nodes that can define triangular elements (e.g., tetrahedra in 3D, higher order simplexes in multidimensional spaces, etc.) or quadrilateral elements (e.g., hexahedra or pyramids in 3D, etc.), or polygonal elements (e.g., prisms in 3D, etc.). Such elements, as defined by corresponding nodes of a grid, may be referred to as grid cells.

Yet another example of a numerical technique is the finite volume method. For the finite volume method, values for model equation variables may be calculated at discrete places on a grid, for example, a node of the grid that includes a "finite volume" surrounding it. The finite volume method may apply the divergence theorem for evaluation of fluxes at surfaces of each finite volume such that flux entering a given finite volume equals that leaving to one or more adjacent finite volumes (e.g., to adhere to conservation laws). For the finite volume method, nodes of a grid may define grid cells.

As an example, a finite volume flow simulator may simulate phenomena using a grid where grid cells defined by the grid may include 6 faces (e.g., cuboid) addressable through three indices (e.g., such that the grid may be deemed a "structured" grid) and that geometry of the grid abides by one or more conditions (e.g., cells do not cross geologic faults and cells do not cross geologic horizons). As an example, in an effort to meet a geologic fault condition, a grid may be offset across one or more geologic faults. Construction of such a grid in a domain where topology of a fault network is complex (e.g., numerous X and Y-shaped intersections) may be non-trivial and demand resources that scale nonlinearly with increasing fault network complexity.

As an example, an approach to modeling of a sedimentary basin can include a pillar grid composed of nodes, pillars and cells. For example, in three-dimensions, eight nodes may define a cell, which may be referred to as a grid cell (e.g., a pillar grid cell). In a pillar grid model, grid cells may be indexed in an indexical domain using indexes i, j, and k (e.g., an indexical coordinate system or space). For example, a cubic grid cell (i.e., defined by eight corner nodes) may be indexed at its shallowest lower left corner and the number of grid cells may be a product of the model's i, j and k dimensions. In such an example, each grid cell may be defined by its eight nodes, which may be labeled according to height and compass directions (e.g., basesouthwest, topsouthwest, basenorthwest, topnorthwest, etc.). Pillar grids can model, for example, faults (e.g., a surface that cuts a pillar grid), horizons (e.g., "k" index), zones (e.g., volume between two horizons), segments (e.g., contiguous block of grid cells bounded by fault planes), etc., and may be used to specify properties (e.g., earth properties).

While an indexical coordinate system is described with respect to a pillar grid, an indexical coordinate system may be used in conjunction with other types of grids. For example, a grid that can define cells may be characterized using indexes such as i, j, and k to represent three spatial dimensions. Such indexes may be capable of representing a grid, for example, in a so-called structured manner (e.g., in contrast to an unstructured manner). As an example, a structured grid may facilitate various types of operations such as those related to matrices, for example, where nearest neighbors may form clusters or bands within a matrix. In turn, a matrix may be handled using a banded solver or other suitable technique. As to a solver for an unstructured grid, as an example, it may rely on input of connectivity information that specifies how grid nodes relate to individual cells. In such an example, a matrix that may not be readily amenable to a banded or other matrix handling technique, which, in turn, can increase computational resource demands, computation time, etc.

As an example, a structured grid that includes a natural (i, j, k) indexing system can improve storage and, for example, facilitate identification of topological neighbors where cell index and connectivity might not be stored in memory and can be deduced from ordering of records/entries in memory. In such an example, storing a structured grid can use less memory than, for example, storing an unstructured grid of similar size. Further, as an example, for construction of large systems of equations (e.g., independently from their resolution), which may involve repeatedly iterating over topological neighbors of a given grid cell, such an approach may be, for example, about an order of magnitude faster when compared to use of an unstructured grid. As an example, a method that can generate a structured grid may provide compatibility with one or more frameworks (e.g., whether current, legacy, etc.).

As mentioned, where a sedimentary basin (e.g., subsurface region) includes various types of features (e.g., stratigraphic layers, faults, etc.), nodes, cells, etc. of a grid may represent, or be assigned to, such features. In turn, discretized equations may better represent the sedimentary basin and its features. As an example, a structured grid that can represent a sedimentary basin and its features, when compared to an unstructured grid, may allow for more simulations runs, more model complexity, less computational resource demands, less computation time, etc.

As an example, a method can include building a grid that accounts for one or more faults in a manner where an indexical structure of the grid is preserved (e.g., a structured grid that accounts for one or more faults). Such a method may include use of multiple coordinate systems, which may be referred to at times, for example, as "domains" or "spaces". For example, a method may include use of a "real" space or domain and a "computational" space or domain. As to a real space or domain, it may be referred to at times, for example, as a geological space or domain. As to a computational space or domain, it may be referred to at times, for example, as a depositional space or domain. Again, a space or domain may be defined using a coordinate system, which may be Cartesian or any another form.

For a sedimentary basin, a computational space (e.g., or depositional domain) may be characterized, for example, as a space: (i) where isochrons (conformable horizons) identified within a real space (e.g., a geological domain) tend to be planar and parallel, (ii) where each point of the computational space located inside a stratigraphic sequence may include a corresponding location in a later-day real space (e.g., a present-day space), and (iii) where geometry of a real space tends to be physically relevant (e.g., representative of actual physical features).

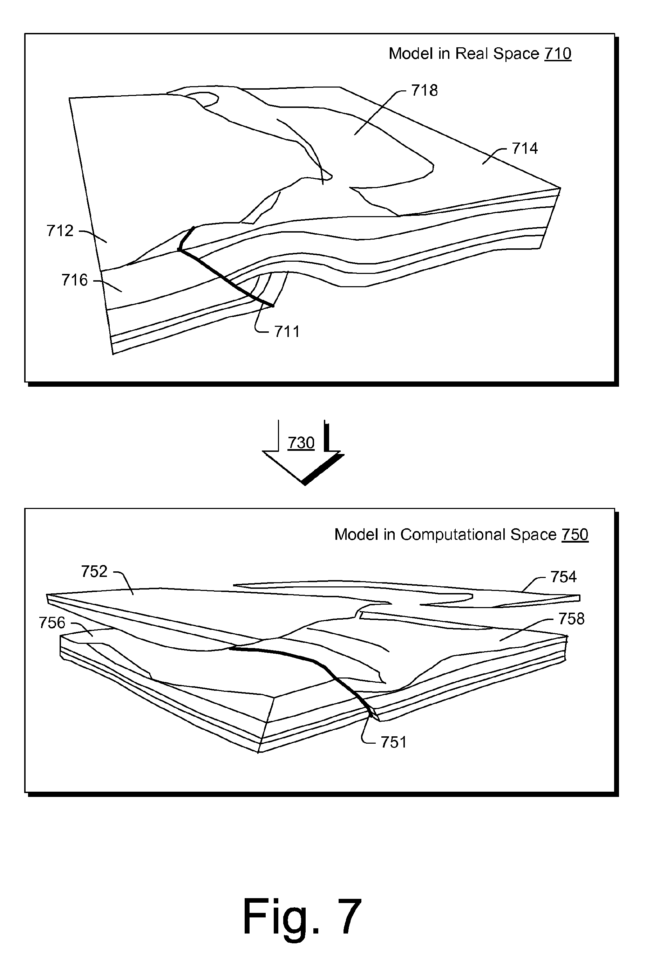

As to item (ii), as an example, a scenario may arise where such a characterization may hold generally, with one or more exceptions. For example, individual points located in a volume of interest (VOI) defined in a real space (e.g. present day space) may correspond to at least one point in a computational space; noting that individual points located onto one or several faults may correspond to several points in the computational space. And, conversely, individual points located in a meshed portion of a computational space may correspond to a single point in a real space and individual points located in an unmeshed portion of a computational space (e.g., in a gap between stratigraphic sequences) may correspond to sediments that have been eroded/not deposited in the real space (see, e.g., Fig. 7).

As to a stratigraphic sequence, a sedimentary basin may include sedimentary deposits grouped into stratigraphic units, for example, based on any of a variety of factors, to approximate or represent time lines that place stratigraphy in a chronostratigraphic framework. While sequence stratigraphy is mentioned, lithostratigraphy may be applied, for example, based on similarity of lithology of rock units (e.g., rather than time-related factors).

As an example, a method can include: providing, in a real space coordinate system, a conformal mesh, conformal to a fault and optionally to stratigraphic units of a geological model, where the conformal mesh includes computational space coordinates associated with a computational space coordinate system; providing, in the computational space coordinate system, an initial, at least vertically structured, multidimensional grid that includes initial nodes that define grid cells; referencing the conformal mesh to identify a set of grid cells of the grid traversed by the fault; rasterizing the fault within the grid along the identified set of grid cells to split the grid along the rasterized fault into first side grid cells and second side grid cells; altering the grid by projecting nodes from the first side grid cells to a first side of the fault and projecting nodes from the second side grid cells to the second side of the fault; and transforming the altered grid to generate, in the real space coordinate system, a transformed grid.

As an example, a grid may conform to structural features such as, for example, Y-faults, X-faults, low-angle unconformities, salt bodies, intrusions, etc. (e.g., geological discontinuities), to more fully capture complexity of a geological model. As an example, a grid may optionally conform to stratigraphy (e.g., in addition to one or more geological discontinuities). As to geological discontinuities, these may include model discontinuities such as one or more model boundaries. As an example, a grid may be populated with property fields generated, for example, by geostatistical methods.

As mentioned, a grid may be built with respect to a computational space, which, for example, may be a three-dimensional computational space defined by three computational space coordinates (u, v, w), which may be stored on nodes of a mesh representing a real space (e.g., specified in a Cartesian coordinate system with coordinates x, y, z). Such a mesh may be referred to as a background mesh. A background mesh can include the property of being conformal to geological discontinuities and optionally conformal to stratigraphy or optionally conformal to both stratigraphy and geological discontinuities (e.g., faults, unconformities, intrusions, model boundaries, etc.). As an example, distribution of computational space coordinates in a background mesh is such that when mapped to a computational space domain coordinate system (e.g., u, v, w), the real features (e.g., other than non-conformable sequence boundaries) are unfaulted and unfolded (e.g., all post-depositional deformations having altered material therein has been removed).

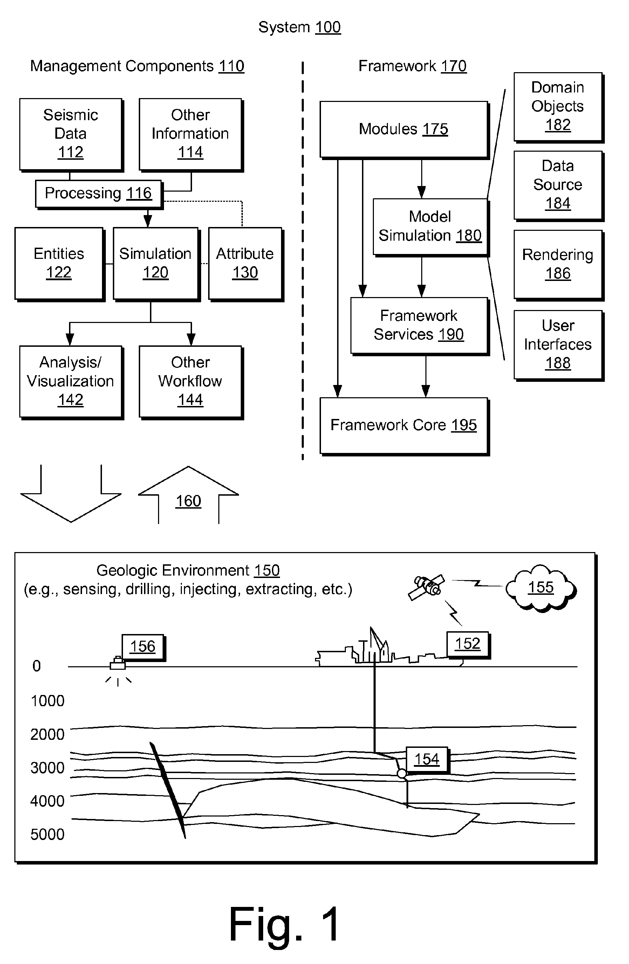

Fig. 1 shows an example of a system 100 that includes various management components 110 to manage various aspects of a geologic environment 150 (e.g., an environment that includes a sedimentary basin). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of Fig. 1, the management components 110 include a seismic data component 112, an additional information component 114 (e.g., well/logging data), a processing component 116, a simulation component 120, an attribute component 130, an analysis/visualization component 142 and a workflow component 144. In operation, seismic data and other information provided per the components 112 and 114 may be input to the simulation component 120.

In an example embodiment, the simulation component 120 may rely on entities 122. Entities 122 may include earth entities or geological objects such as wells, surfaces, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114).

In an example embodiment, the simulation component 120 may rely on a software framework such as an object-based framework. In such a framework, entities may include entities based on pre-defined classes to facilitate modeling and simulation. A commercially available example of an object-based framework is the MICROSOFT® .NET^{™} framework (Redmond, Washington), which provides a set of extensible object classes. In the .NET^{™} framework, an object class encapsulates a module of reusable code and associated data structures. Object classes can be used to instantiate object instances for use in by a program, script, etc. For example, borehole classes may define objects for representing boreholes based on well data.

In the example of Fig. 1, the simulation component 120 may process information to conform to one or more attributes specified by the attribute component 130, which may include a library of attributes. Such processing may occur prior to input to the simulation component 120. Alternatively, or in addition, the simulation component 120 may perform operations on input information based on one or more attributes specified by the attribute component 130. In an example embodiment, the simulation component 120 may construct one or more models of the geologic environment 150, which may be relied on to simulate behavior of the geologic environment 150 (e.g., responsive to one or more acts, whether natural or artificial). In the example of Fig. 1, the analysis/visualization component 142 may allow for interaction with a model or model-based results. Additionally, or alternatively, output from the simulation component 120 may be input to one or more other workflows, as indicated by a workflow component 144.

In an example embodiment, the management components 110 may include features of a commercially available simulation framework such as the PETREL® seismic to simulation software framework (Schlumberger Limited, Houston, Texas). The PETREL® framework provides components that allow for optimization of exploration and development operations. The PETREL® framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of simulating a geologic environment).

As an example, the simulation component 120 may include one or more features of a simulator such as the ECLIPSE^{™} reservoir simulator (Schlumberger Limited, Houston Texas), the INTERSECT^{™} reservoir simulator (Schlumberger Limited, Houston Texas), etc. As an example, a reservoir or reservoirs may be simulated with respect to one or more enhanced recovery techniques (e.g., consider a thermal process such as SAGD, etc.). As an example, a simulator may accept as input a grid such as, for example, a structured grid for purposes of simulating one or more physical phenomena. As an example, such a structured grid may be generated by transforming a grid in a computational space to a grid in a real space, for example, where one or more faults have been introduced into the grid in the computational space such that the one or more faults exist in the structured grid in the real space (e.g., structured according to an indexing system).

In an example embodiment, various aspects of the management components 110 may include add-ons or plug-ins that operate according to specifications of a framework environment. For example, a commercially available framework environment marketed as the OCEAN® framework environment (Schlumberger Limited, Houston, Texas) allows for seamless integration of add-ons (or plug-ins) into a PETREL® framework workflow. The OCEAN® framework environment leverages .NET® tools (Microsoft Corporation, Redmond, Washington) and offers stable, user-friendly interfaces for efficient development. In an example embodiment, various components may be implemented as add-ons (or plug-ins) that conform to and operate according to specifications of a framework environment (e.g., according to application programming interface (API) specifications, etc.).

Fig. 1 also shows an example of a framework 170 that includes a model simulation layer 180 along with a framework services layer 190, a framework core layer 195 and a modules layer 175. The framework 170 may include the commercially available OCEAN® framework where the model simulation layer 180 is the commercially available PETREL® model-centric software package that hosts OCEAN® framework applications. In an example embodiment, the PETREL® software may be considered a data-driven application. The PETREL® software can include a framework for model building and visualization. Such a model may include one or more grids.

The model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components.

In the example of Fig. 1, the domain objects 182 can include entity objects, property objects and optionally other objects. Entity objects may be used to geometrically represent wells, surfaces, reservoirs, etc., while property objects may be used to provide property values as well as data versions and display parameters. For example, an entity object may represent a well where a property object provides log information as well as version information and display information (e.g., to display the well as part of a model).

In the example of Fig. 1, data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored using the model simulation layer 180, which can recreate instances of the relevant domain objects.

In the example of Fig. 1, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc.

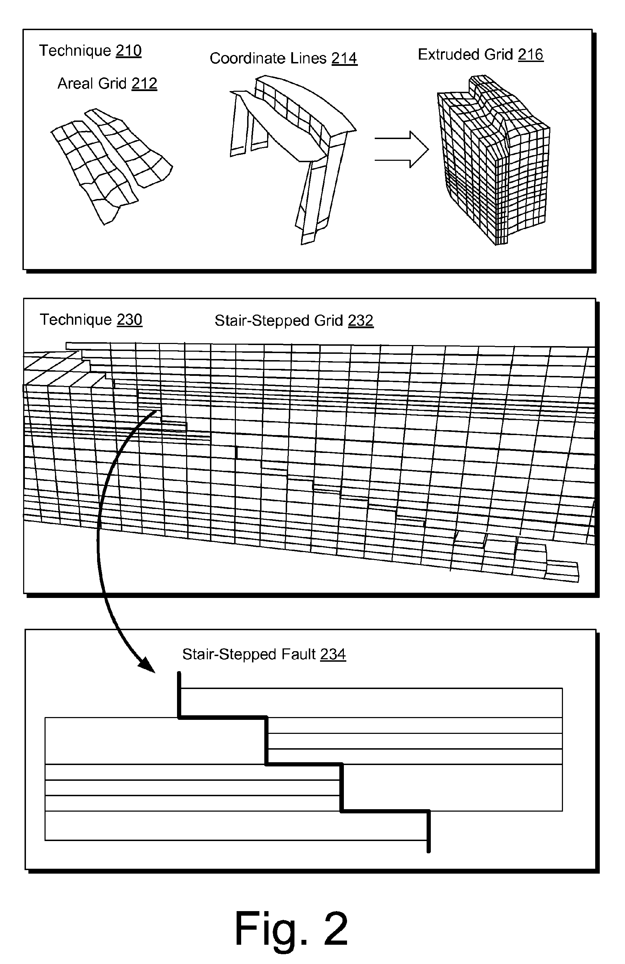

Fig. 2 shows examples of techniques for handling faults that can give rise to some inaccuracies. In particular, a technique 210 and a technique 230 can be used for creating faulted structured grids that conform to geological horizons.

As to the technique 210, it is based on the extrusion of a surface grid. For example, a topological areal grid 212 conforming to and cut by a fault of a fault network is built and some coordinate lines 214 are provided. Given the grid 212 and the coordinate lines 214, a 3D grid 216 is created by an extrusion process that may include duplicating multiple times the base grid and adapting it to the horizon geometry, along linear or curved coordinate lines which trajectory is computed in such a way it does not cross the fault network.

The technique 210 can give rise to some issues, for example, it may not be possible to design coordinate lines that run from the base to the top of the grid without crossing any fault and it may not allow efficient minimization of distortion of grid cells (e.g., distortion being defined as a measure of the distance to purely orthogonal geometries).

As to the technique 230, it includes creating first a 3D (unfaulted) grid that conforms to horizon surfaces and then rasterizing faults within the grid, for example, where the action of rasterizing corresponds to finding the set of cell facets that correspond the best to the fault surfaces and "unsewing" (e.g., unstitching) the grid along these facets. Such a rasterization process involves computing a set of edges of a topological dual of the grid that are intersected by an object(s) to be rasterized, which, in the example of Fig. 2, is a fault, as shown in a side view of a 3D grid 232 and in an enlarged simplified side view 234. In the technique 230, layering of the grid, as well as minor geometry and topology editions, are often performed after rasterization. As an example, a technique such as that described in US Patent Application Publication No. 2008/0243454 A1 may be implemented.

The technique 230 can give rise to some issues. For example, the grid facets representing the faults may poorly approximate the geometry of the initial fault surfaces. And, such a rasterization operation may involve creating a stair-stepped (or zig-zag) representation of the fault surfaces (see, e.g., 234). Consequences may be potentially problematic to situations where petrophysical properties - potentially affecting flow simulations - are associated with the fault surfaces (e.g., such as those related to fault permeability) and to situations where wells are crossing the faults because location of the intersections with the faults are represented with some level of inaccuracy.

As an example, a method may involve a so-called "snap" process where grid nodes corresponding to faults are "snapped" onto an actual geometry of the fault surfaces. Such a process may mitigate to varying extent stair-stepped issues. However, some issues may be inherent to the snapping process (e.g., a combination of projection of grid nodes that aims to provide convex polyhedra may provide one or more polyhedra that lack convexity, which may impact a numerical simulator). For various reasons, such a snap process may not overcome the aforementioned consequences associated with stair-stepping.

Rasterization, as applied to a grid, may subject grid geometry to contradictory constraints. For example, consider a desire to maintain matching stair-steps on both sides of a fault (e.g., to avoid gaps, overlaps, etc.) and another desire to maintain layering of a grid that follows geological surfaces (e.g., per seismic or well data). As fault displacement may create an offset between both sides of the fault that does not correspond to an integer number of cells in a vertical direction of a grid (e.g., k index, time, or depth), distortions may occur in the neighborhood of a fault (e.g., by stretching, squeezing or merging grid cells vertically, moving horizons artificially, or both). Thus, where rasterization is applied to a grid, it may impose some amount of degradation of either grid quality and/or model accuracy.

By subjecting a grid to rasterization, preservation of proper IJK indexing of grid cells may be confounded. As an example, to avoid creating gaps and overlaps in IJK space, some cells may be added either above or below the normal grid, or in between fault blocks. As a result, some cells may be marked as "inactive" because they do not correspond to any actual volume in physical space. Such indexing inconsistencies may have an adverse impact on performance of geostatistical interpolation algorithms (e.g., such as kriging) on a grid, for example, because such algorithms may expect cell neighborhood information to be deducible from IJK indices of the cells.

While Fig. 2 shows examples of two techniques (techniques 210 and 230), yet another technique for handling a fault network involves creating an extruded areal grid (e.g., built from a regular, Cartesian pattern) with each (I,J) cell of the areal grid corresponding to a "stack of cells" of the volume grid, then cutting the created "stacks" by the fault network, further cutting created "sub-stacks" by faulted horizon surfaces, refining vertically the cut substacks into grid cells and finally associating a unique I,J,K index with each of the cells. Such a technique tends to create distorted cells with faces deviating from being orthogonal, horizons that may deviate from horizontal, and degenerate cells (e.g., cells of comparatively small volume). Such a technique may also involve some geometrical approximations where a stack is partially intersected by a fault and addition of unnecessary cells or unrealistic thickening/thinning of the cells is performed to accommodate fault displacements. Where a geologic environment includes structures such as overturned folds, the foregoing technique may be inadequate.

As an example, a method can include building a grid adapted to represent one or more geological structures for use in a geological modeling framework, a flow simulator (e.g., finite volume, etc.) or other tool (e.g., application, framework, etc.). Such a method can include building a grid independent of fault topology (e.g., topology of a fault, a fault network, etc.). As an example, a method may minimize distortion of grid cells, for example, to honor geometry of a horizon or horizons and a fault or faults while tending to create grid cells that are as orthogonal as possible for large portions of a grid, which may be a quality useful for finite-difference flow simulators. As an example, a produced grid may be represented using a format such as an indexical format where each grid cell may be associated with a particular [I,J,K] index (e.g., where the index K may be associated with geological layering), for example, to allow use of such a grid in a simulator, modeler, etc. (e.g., for direct use without having to pre-process grid indexing, etc.).

As an example, a method can include building a structured grid (e.g., IJK indexed) that may represent, for example, a structurally complex faulted and folded reservoir. While structured grids may provide certain benefits, as an example, such a method may optionally be implemented for building a faulted unstructured grid.

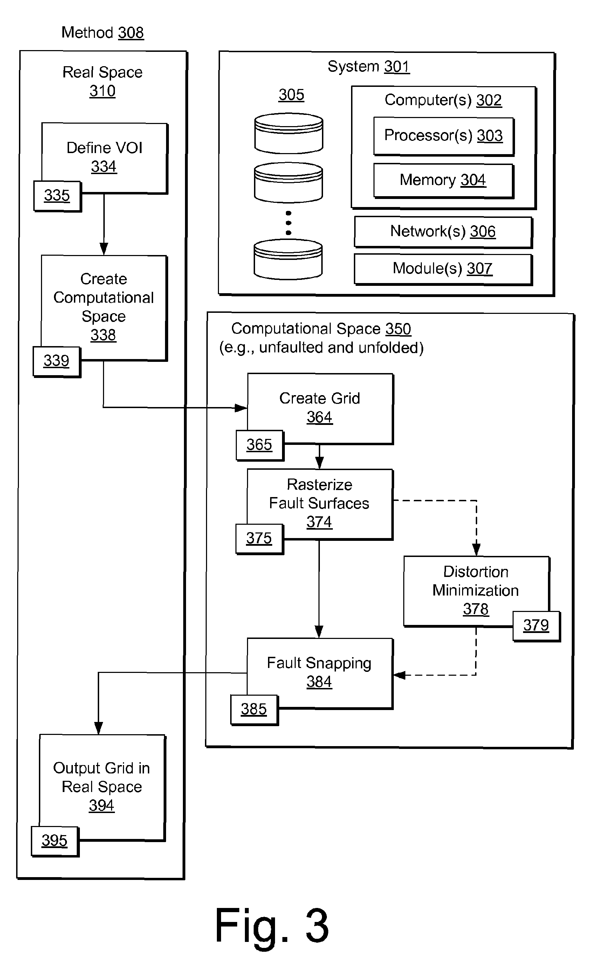

Fig. 3 shows an example of a system 301 and a method 308. As shown in Fig. 3, the system 301 includes one or more computers 302, one or more storage devices 305, one or more networks 306 and one or more modules 307. As to the one or more computers 302, each computer may include one or more processors (e.g., or processing cores) 303 and memory 304 for storing instructions (e.g., modules), for example, executable by at least one of the one or more processors. As an example, a computer may include one or more network interfaces (e.g., wired or wireless), one or more graphics cards, a display interface (e.g., wired or wireless), etc. As an example, data may be provided in the storage device(s) 305 where the computer(s) 302 may access the data via the network(s) 306 and process the data via the module(s) 307, for example, as stored in the memory 304 and executed by the processor(s) 303.

As shown in Fig. 3, the method 308 includes a real space 310 and a computational space 350 where various actions may be performed in the real space 310 (e.g., with respect to a coordinate system that corresponds to a physical geologic environment) and where various actions may be performed in the computational space 350 (e.g., with respect to a coordinate system that corresponds to a depositional domain mathematically associated with the physical geologic environment). For example, the method 308 can include a definition block 334 that defines a volume of interest (VOI) in the real space 310 and a creation block 338 that creates the computational space 350. In such an example, given the created computational space 350, the method 308 can include a creation block 364 for creating a grid in the computational space 350, a rasterization block 374 for rasterizing surfaces of one or more faults (e.g., of a fault network) in the grid in the computational space 350 and a fault snapping block 384 for establishing connections by "snapping" nodes to the rasterized surfaces (e.g., of at least one of the one or more faults). As an example, the method 308 may include a distortion minimization block 378 for minimizing distortion, for example, associated with one or more rasterized fault surfaces prior to performing fault snapping of the fault snapping block 384. After fault snapping in the computational space 350, the method 308 can include an output block 394 for outputting a grid in the real space 310 based on the processes performed with respect to the grid created in the computational space 350.

The method 308 is shown in Fig. 3 in association with various computer-readable media (CRM) blocks 335, 339, 365, 375, 379, 385 and 395. Such blocks generally include instructions suitable for execution by one or more processors (or cores) to instruct a computing device or system to perform one or more actions. While various blocks are shown, a single medium may be configured with instructions to allow for, at least in part, performance of various actions of the method 308. As an example, a computer-readable medium (CRM) may be a computer-readable storage medium. As an example, a CRM block may be a module, for example, such as a module as in the one or more modules 307 of the system 301. In such an example, the system 301 may be implemented to perform, at least in part, the method 308 of Fig. 3.

In the example of Fig. 3, the definition block 334 may provide for defining a VOI, for example, by enclosing a portion of space that includes geological interfaces such as horizons, faults and/or unconformities. As to the creation block 338, it may provide for creation of a computational space, for example, by associating each point of the VOI to a point in a space in which an arbitrary set of conformable horizons have been un-faulted and unfolded. As to the creation block 364, it may provide for construction, for example, of an un-faulted 3D (e.g., structured or unstructured) grid in the created computational space. As to the rasterization block 374, it may provide for rasterizing of one or more fault surfaces, for example, transferred from the real space to the computational space, in a created un-faulted grid. As mentioned, the method 308 may include performing one or more actions to minimize distortion, for example, where the block 378 may act upon a local edition of a mapping computed by creation of the computational space (e.g., per the creation block 338) in a manner that acts to minimize distortions that may be introduced during a snapping process (e.g., per the fault snapping block 384). As an example, the fault snapping block 384 may include projecting grid nodes such that grid nodes in near or in a neighborhood of a fault are snapped to the fault. For example, the fault snapping block 384 may include projecting grid nodes belonging to disconnected cell faces (e.g., faces corresponding to rasterized fault surfaces per the rasterization block 374) onto a smooth fault surface (e.g., or fault surfaces), for example, such as the surfaces that were used as input to block 374. In such an example, one or more rules may be applied to projecting or snapping, for example, to determine whether projecting or snapping occurs vertically, horizontally, or in another manner. As to the output block 394, it may provide for transforming a grid in the computational space 350 to the real space 310. For example, the output block 394 may include a reverse mapping process that reverses a mapping associated with the creation block 338 for creating the computational space 350.

As shown in the example of Fig. 3, the method 308 can include performing rasterization (e.g., stair-stepping) in the computational space 350 (e.g., per the rasterization block 374) in a manner that "cancels" fault displacement. In such an example, where fault displacement may be avoided, discrepancies between observed fault displacements and cell thicknesses may also be avoided. As shown in the example of Fig. 3, the method can include projecting (e.g., or snapping) in the computational space 350 (e.g., per the fault snapping block 384) in a manner where points (e.g., nodes) are projected onto a fault plane prior to converting the grid (e.g., a model grid) from the computational space 350 to the real space 310 that provides for grid nodes corresponding to the fault being mapped to appropriate locations in real space, on their respective appropriate sides of the fault.

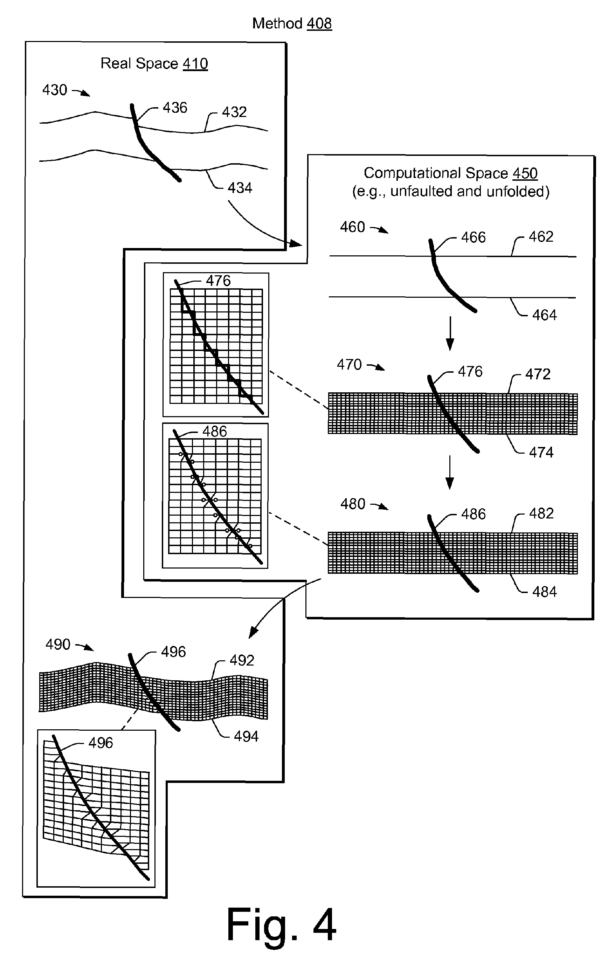

Fig. 4 shows an example of a method 408 along with various graphics that represent grids in a real space 410 and grids in a computational space 450 where the grids include an upper horizon, a lower horizon and a fault. In the example of Fig. 4, the method 408 may include various actions such as those associated with the blocks of the method 308 of Fig. 3.

In Fig. 4, a grid 430 in the real space 410 represents initial data for an upper horizon 432, a lower horizon 434 and a fault 436; a grid 460 in the computational space 450 that represents the initial data being mapped to the computational space 450 and that includes an upper horizon 462, a lower horizon 464 and a fault 466; a grid 470 that is a rasterized (e.g., stair-stepped) grid that is rasterized between an upper horizon 472, a lower horizon 474 along a fault 476; a grid 480 in the computational space 450 resulting from projection (e.g., snapping) of points (e.g., nodes) being performed on the grid 470 with respect to a fault 486 between an upper horizon 482 and a lower horizon 484; and a grid 490 in the real space 410, for example, resulting from a reverse mapping from the computational space 450 to the real space 410 (e.g., rather from the real space 410 to the computational space 450).

As to the projecting (e.g., snapping) of points (e.g., nodes) of the rasterized grid 470 to generate the grid 480, Fig. 4 shows enlarged graphics for portions of the grids 470 and 480 (e.g., as well as the grid 490). As an example, the enlarged portion of the grid 470 shows a rasterized (e.g., stair-stepped) line based in part on the fault 476 where the rasterized line may define sets of cells (e.g., as to two sides of the fault 476) while the enlarged portion of the grid 480 shows some examples where nodes (open circles) have been projected (e.g., snapped) onto the fault 486 at new locations (filled circles). In such an example, some nodes that correspond to the rasterized line may be projected (e.g., snapped) onto the fault 486 (e.g., from each of the two sides of the fault 486). As an example, the rasterized line may be referred to as a rasterized fault; noting that, as shown in the example of Fig. 4, a portion of the nodes may be projected (e.g., snapped) onto the fault (e.g., as represented by the fault 466, 476 or 486, which may be nonlinear).

As an example, a method can include defining a volume of Interest (VOI) enclosing a portion of space containing geological interfaces such as horizons, faults and/or unconformities. In such an example, the VOI may be, for example, defined by a closed polygon, vertical limits specified as arbitrary depth values or as geologic surfaces (layer boundaries), a union of disjoint closed polyhedral, etc. Fault surfaces may be, for example, specified to limit a lateral extent of a VOI.

As an example, a method can include creation of a computational space that associates points of a VOI to corresponding points in a space, for example, in which an arbitrary set of conformable horizons have been un-faulted and unfolded (see, e.g., US Patent Application Publication No. 2001/0106507).

As an example, once defined, a VOI may be represented by a mesh. For example, such a mesh may include be a fully or partly unstructured volume mesh conforming to one or more fault surfaces, and optionally one or more horizon surfaces, that may fill a VOI. As an example, a volume mesh may be disconnected along fault (e.g., and unconformity surfaces) such that one side of the fault and another side of the fault may be represented by two sets of disconnected polygons (e.g., disconnected in that one set corresponds to one side of the fault and another set corresponds to the other side of the fault). In such an example, the two sets of disconnected polygons may or may not be geometrically coincident.

As an example, a method can include creating a computational space in which conformable horizon surfaces are flattened and unfaulted. In such an example, given vertices of a created volume mesh in a real space that are located by the means of their (e.g., x, y, z) coordinates (e.g., Cartesian coordinates in the real space), the computational space may be represented by a second set of coordinates (e.g., u, v, w), which may be defined at the vertices. In such an example, the second set of coordinates (e.g., u, v, w) may be obtained, for example, by mechanically simulating the flattening of the structure, by numerically interpolating an (u, v, w) frame in such a way that conformable horizons defined within the volume correspond to iso-w surfaces, etc. As to numerical interpolation, as an example, in an (u, v, w) coordinate system, gradients of u and v may be constrained to be approximately orthogonal to each other during the interpolation.

As an example, in a computational space, an individual horizon may be represented by a flat, planar continuous surface patch. In such an example, global deformation between a real space and the computational space may be minimized. As an example, knowledge of both (x, y, z) and (u, v, w) coordinates at each vertex of a volume mesh can allow for transfer of a geometrical point located in a VOI from the real space to the computational space and, for example, conversely, to map points back from the computational space into the real space. As to such a reverse mapping, a method may include interpolating real space (x, y, z) and computational space (u, v, w) coordinates within various individual elements of a volume mesh. As an example, given a real space and a computational space with a corresponding mesh, geometry of a fault located partially or totally in a VOI may be converted from the real space to the computational space.

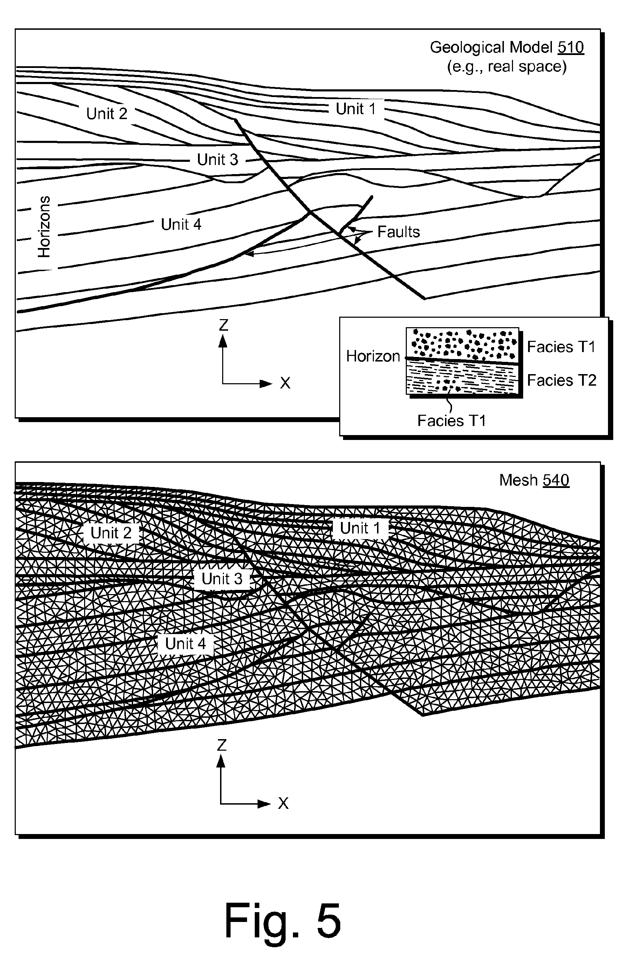

Fig. 5 shows an example of a geological model 510 (e.g., in a real space) and an example of a corresponding mesh 540. In the example of Fig. 5, the geological model 510 and the mesh 540 are shown with respect to two dimensions (Z, X) of a geological domain coordinate system (e.g., in a real space). The geological model 510 includes various features such as horizons, faults and facies (e.g., type 1, type 2, etc.). Further, the geological model 510 includes four different stratigraphic units. In the example of Fig. 5, the mesh 540 conforms to various features of the geological model 510 via a tessellated field of triangles where each triangle is defined by three nodes of the mesh 540. For example, legs of triangles lie along the boundaries of the various faults, legs of triangles lie along the boundaries of the various horizons, etc. Thus, the mesh 540 may be referred to as a conformal mesh (e.g., it conforms to faults, stratigraphic units, horizons, unconformities, model boundaries of the geological model 510, etc.).

In general, a relationship may exist between node spacing and phenomenon or phenomena being modeled. Various scales may exist within a geologic environment, for example, a molecular scale may be on the order of approximately 10⁻⁹ to approximately 10⁻⁸ meters, a pore scale may be on the order of approximately 10⁻⁶ to approximately 10⁻³ meters, bulk continuum may be on the order of approximately 10⁻³ to approximately 10⁻² meters, and a basin scale on the order of approximately 10³ to approximately 10⁵ meters. As an example, nodes of a mesh may be selected based at least in part on the type of phenomenon or phenomena being modeled (e.g., to select nodes of appropriate spacing or spacings). As an example, nodes of a grid may include node-to-node spacing of about 10 meters to about 500 meters. In such an example, a basin being modeled may span, for example, over approximately 10³ meters. As an example, node-to-node space may vary, for example, being smaller or larger than the aforementioned spacings.

Some data may be involved in building an initial geological model and a corresponding mesh and, thereafter, a model and a corresponding mesh may optionally be updated in response to model output, changes in time, physical phenomena, additional data, etc. Data may include one or more of the following: depth or thickness maps and fault geometries and timing from seismic, remote-sensing, electromagnetic, gravity, outcrop and well log data. Furthermore, data may include depth and thickness maps stemming from facies variations.

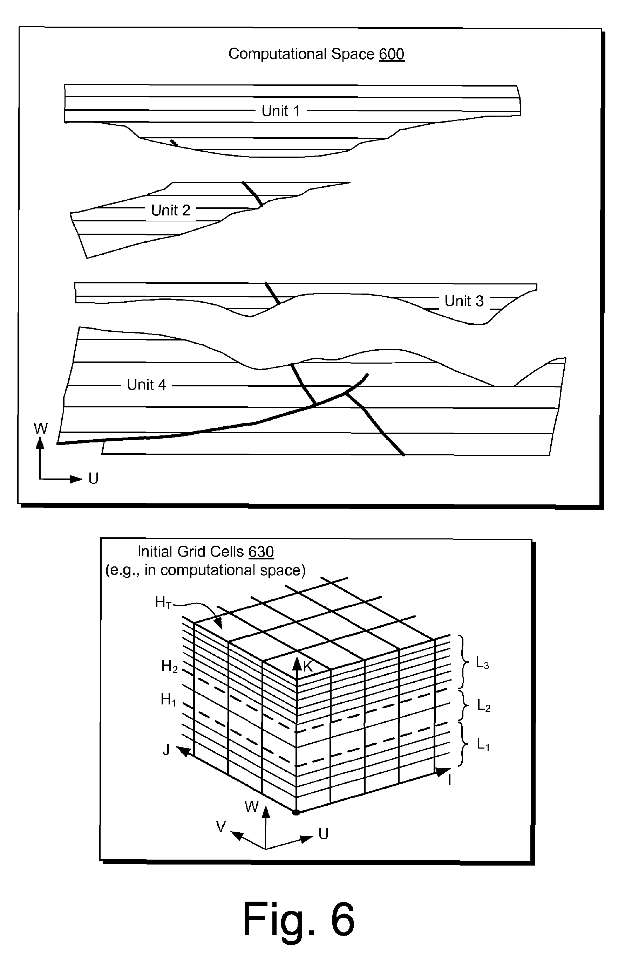

Fig. 6 shows an example of a computational space 600 (e.g., a depositional domain) that includes the four stratigraphic units of Fig. 5. In the example of Fig. 6, the four stratigraphic units are shown with respect to two dimensions (W, U) of a coordinate system for the depositional domain. As shown, in each of the stratigraphic units, horizons align with the U coordinate (e.g., as mentioned, a depositional domain may be characterized as including isochrons that tend to be planar and parallel). Thus, the four stratigraphic units in the computational space 600 (e.g., a depositional domain) include horizons that are unfolded and unfaulted (see, e.g., horizontal lines intersecting thick lines that may represent discontinuities such as geological faults). As to limits of a stratigraphic unit, as shown in the example of Fig 6, each of the units includes at least one "limit" that does not conform to an "isochron". For example, a limit or limits of a stratigraphic unit may be an unconformal or an "unconformity" (e.g., erosions, baselaps, discontinuities, etc.), for example, it may correspond to a gap in a geological record. Again, as shown in the units of Figs. 5 and 6, such particular "horizons" are not flat in the computational space 600 (e.g., a depositional domain), for example, see the upper portion of Unit 4. Depending on its geological type (baselap, erosion, discontinuity), an "unconformity" may be conformal to the stratigraphic unit below it while not being conformal to the unit above it ("baselap", see, e.g., top of unit 3 in Fig. 6), non-conformal to both units above and below ("discontinuity", see, e.g., top of unit 4 in Fig. 6) or conformal to the unit above but not to the unit below ("erosion", not shown in Fig. 6). As an example, an unconformity surface being represented by two different surfaces in a depositional space (e.g., one for a stratigraphic unit above and one for a stratigraphic unit below), the surface (if any) representing a conformable boundary can be flat. Moreover, due to lateral variation in sedimentation characteristics, the geological type of an horizon may vary laterally (e.g., an horizon may be fully conformable in part of the area of interest and non-conformal to at least one of the two stratigraphic unit it is limiting in another part of the model). As an example, such horizon may be flat on part of a VOI in a depositional space (e.g., computational space).

Given some examples of a geological model in a real space (e.g., a geological domain), a conformal mesh in a real space (e.g., a geological domain) and stratigraphic units in a computational space (e.g., a depositional domain), various examples of aspects of building a grid are described.

As an example, given a computational space (e.g., a depositional domain), an initial, at least vertically structured grid may be created that covers at least a portion of the computational space. For example, the initial at least vertically structured grid may cover a portion of the computational space that includes one or more stratigraphic units. To create the initial at least vertically structured grid, a mesh defined by nodes in a real space (e.g., a geological domain) may be provided that includes computational space coordinates associated with each of the nodes. For example, for the mesh 540 of Fig. 5, each of the nodes in the real space may include or otherwise be associated with coordinates for the computational space 600 of Fig. 6. Thus, in such an example, a mapping may occur for a node of the mesh 540 to a position in the computational space 600. As the mesh 540 is a conformal mesh, the stratigraphic units and geological discontinuities of the geological model 510 may be mapped to the computational space 600. Accordingly, the mesh 540 may serve as a reference for features that exist in the geological model 510. As an example, a mesh, a grid, nodes, grid cells, etc., may be represented by one or more data structures populated with various information (e.g., coordinates of one or more coordinate systems, etc.). As an example, such a data structure may be stored in a data store (e.g., a data storage device).

Fig. 6 also shows an example of initial grid cells 630 in a three dimensional computational space (U, V, W). In this example, the initial grid cells are defined by an initial grid that is at least vertically structured (e.g., vertically and horizontally structured or vertically structured). As an example, in the three spatial dimensions, to create an initial at least vertically structured grid, it is possible to loop over nodes of a conformal mesh (e.g., on which computational space coordinates are stored), and to record minimum and maximum values of each of the computational space coordinates (e.g., for U, V and W: minᵤ, minᵥ, min_{w}, maxᵤ, maxᵥ and max_{w}, respectively).

As an example, in the three-dimensional computational space (U, V, W) eight points defined as (minᵤ, minᵥ, min_{w}), (maxᵤ, minᵥ, min_{w}), (maxᵤ, maxᵥ, min_{w}), (minᵤ, maxᵥ, min_{w}), (minᵤ, minᵥ, max_{w}), (maxᵤ, minᵥ, max_{w}), (maxᵤ, maxᵥ, max_{w}), and (minᵤ, maxᵥ, max_{w}) define a cuboid in which a produced grid may fit (e.g., that includes grid cells and optionally sub cells). As an example, assuming a grid is defined by i, j, k indices in an indexical coordinate system (I, J, K) and that a number of grid cells in each of the indexical coordinate system directions I, J and K may be referred to as Nᵢ, Nⱼ and Nₖ, respectively, then former points may be respectively associated with grid nodes with indices (0, 0, 0), (Nᵢ, 0, 0), (Nᵢ, Nⱼ, 0), (0, Nⱼ, 0), (0, 0, Nₖ), (Nᵢ, 0, Nₖ), (Nᵢ, Nⱼ, Nₖ), and (0, Nⱼ, Nₖ). In such an example, the I and J directions align with the U and V directions, respectively; noting that as a general case, I and J directions may be oriented in any of a variety of orientations in a computational space. To facilitate grid building, however, the K direction of the indexical coordinate system may be aligned with the W direction of the computational space coordinate system (e.g., as a height or depth dimension as in a pillar grid).

As shown in the example of Fig. 6, for the initial grid cells 630, where the K direction is oriented vertically, a k value may be assigned to each horizon identified between the top (k = Nₖ by convention) and the bottom (k = 0 by convention) of a geological model. Such a k value, "kᵢ", depends of a number of grid cells nᵢ for each layer Lᵢ of a model (e.g., which may be assumed to be known): kᵢ = sum (j = 1 to i) nⱼ. The w coordinates attached to the k values may be known where they correspond to horizons in the computational space (see, e.g., example horizons in the computational space 600 of Fig. 6). For w coordinates attached to remaining k values, these may be computed using, for example, a linear interpolation inside a layer to which they belong. As to u and v coordinates of grid nodes, these may be computed as follows for examples where grid geometry is regular with respect to their directions: u(i, j, k) = minᵤ + i((maxᵤ - minᵤ)/Nᵢ), and v(i, j, k) = minᵥ + j((maxᵥ - minᵥ)/Nⱼ). In the example of Fig. 6, the computational space geometry of an at least vertically structured grid may be defined where grid nodes may optionally include consistent computational space coordinates (u, v, w). As shown in the example of Fig. 6, the initial grid cells 630 may be regular cuboids that may be specified according to grid cell indices (e.g., in the indexical coordinate system I, J, K). In the example of Fig. 6, initial grid cells may include shapes other than regular cuboids (e.g., where they are at least vertically structured).

As an example, consider a method where the initial grid cells 630 of Fig. 6 may correspond to a provision block that provides a grid in a computational space that includes nodes that define grid cells. In the example of Fig. 6, the initial grid cells 630, as well as the nodes that define these cells, are structured and horizons (e.g., iso-w, as in the example of Fig. 5) may be assigned to specific k coordinates according to a number of layers (e.g., three layers) and a number of desired cells in each of the layers (e.g., 4, 2, and 7, respectively). In the example of Fig. 6, the grid of the initial grid cells 630 is regular in the I and J directions, which are aligned respectively with the U and V directions, noting again that these axes of the grid may have another orientation in a computational space.

Fig. 7 shows an example of a model in a real space 710 and an example of the model in a computational space 750. As shown, the model in the real space 710 includes a fault 711 as well as various layers 712, 714, 716 and 718. As shown, the layers 712 and 714 correspond to a common event and the layers 716 and 718 correspond to a common event, for example, where on one side of the fault 711, the layer 718 is exposed, for example, due to erosion (e.g., or non-deposited material). As to the model in the computational space 750, a corresponding fault 751 exists along with corresponding layers 752, 754, 756 and 758. For the model in the computational space 750, geological unconformities have not been flattened and eroded or non-deposited material is represented by a gap between layers 752 and 756 and layers 754 and 758 in the computational space.

As an example, situations may exist where points of a VOI in a real space have a counterpart in a computational space, yet one or more points of the computational space may not have a counterpart in the real space. For example, a computation space may include one or more points corresponding to eroded or non-deposited sediments that do not have a counterpart in the real space. As an example, a real space coordinate system (x, y, z) to computational space coordinate system (u, v, w) transform may be represented by an (u, v, w) scalar field, by a vector field, etc. In such an example, a transform may be represented by a scalar field, a vector field, etc., which is discontinuous across a fault and, for example, one or more unconformity surfaces.

As an example, a method can include construction of an un-faulted 3D structured grid in a previously computed computational space. As an example, an areal extent of a grid may be defined in such a way that at least a portion of the areal extent corresponds to that covering a 3D VOI, for example, once it has been converted to a computational space. As an example, in a computational space a 3D grid may be composed of planar layers of substantially constant thickness where, for example, flattened horizons are incorporated as boundaries between. In such an example, a number of cells between two flattened horizons may be defined arbitrarily.

As an example, a grid may be built in a space as a Cartesian grid that may be regularly spaced areally while it may be irregularly spaced vertically, for example, to represent accurately variability of petrophysical properties across geological layers. In such an example, if a structured (IJK-indexed) grid is built, indexing of grid cells may be preserved. As an example, non-faulted irregular or unstructured grids may also be built.

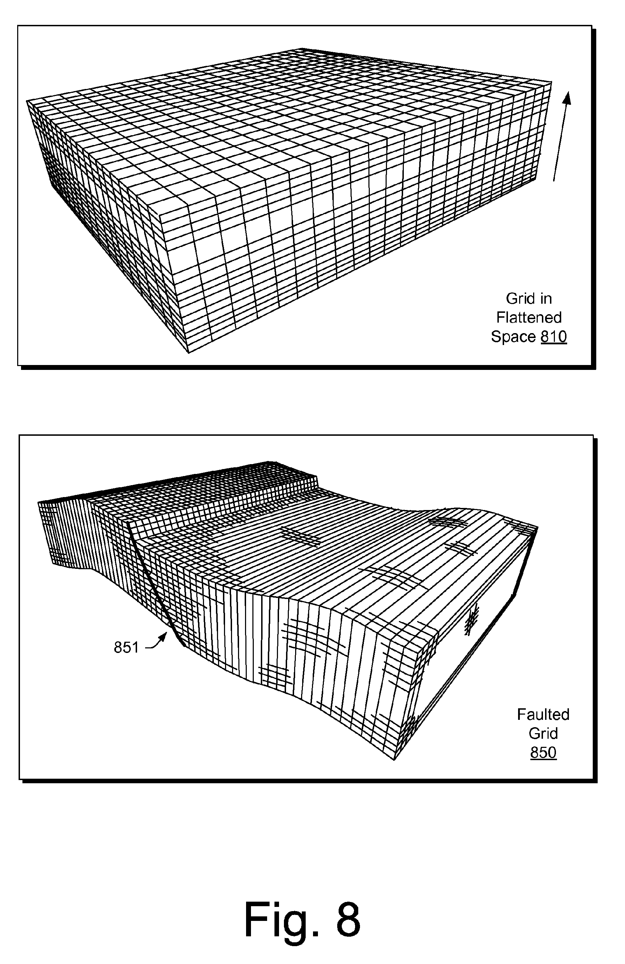

Fig. 8 shows an example of a grid 810 and an example of a grid 850. As to the grid 810, it may be created in a computational space, for example, per the block 364 of the method 308 of Fig. 3. As shown in Fig. 8, the grid 810 may be defined with respect to a Cartesian coordinate, for example, with irregular vertical spacing along one of the coordinate directions and, for example, regular lateral spacing along the other two coordinate directions. As an example, a method such as the method 308 of Fig. 3 may include rasterizing the grid 810 with respect to a fault and snapping nodes with respect to the fault followed by reverse mapping from a computational space to a real space to arrive at the grid 850. The grid 810 may be referred to as a simplified grid, for example, in a flattened space (e.g., unfaulted and unfolded). As an example, such a grid may include grid layering adapted to honor geological interfaces and desired resolution.

Referring to the unfaulted grid 810, a rasterization process may be applied that acts to transfer one or more fault surfaces from a real space to the grid 810 in its computational space, which may be referred to as a flattened computational space. In such a process, in the flattened computational space, one or more faults may be expected to not be offset. For example, a rasterization process can include topologically "un-sewing" (e.g., disconnecting) the grid 810 along cells faces, corresponding dual edges thereof being intersected by fault surfaces.

As to the term "dual edge", it may refer to a segment linking centers of two cells separated by a considered face. In such an example, disconnected cell faces and grid nodes may be denoted as "split faces" and "split nodes", respectively. As an example, consider a grid being IJK-indexed such that split nodes share the same node indexing while having independent geometrical coordinates.

As an example, a "sidedness" property may be applied that acts to record localization of split grid nodes with respect to a fault surface, for example, by storing sidedness as a property along with index and geometrical coordinates. As an example, a grid may be constructed via rasterization that includes sidedness properties for one or more faults in a model.

As an example, where an initial grid may not be aligned with boundaries of a volume of interest (VOI), the boundaries may be rasterized, for example, as part of a rasterization process (see, e.g., block 374 of Fig. 3). As an example, after rasterization of one or more boundaries, points (e.g., nodes) or cells located outside of the VOI may be marked as being inactive.

Referring again to the method 308 of Fig. 3, the optional distortion minimization block 378 may include generation of a local edition of a mapping (e.g., in moving from a real space to a computational space) to minimize distortions that may be introduced during a subsequent snapping process (see, e.g., the fault snapping block 384).

As an example, a distortion minimization operation may act to ensure that intersections between faults and a grid in a computational space are as closely as possible collocated with nodes of the grid. For example, to minimize an amount of lateral displacement of grid nodes during a snapping process, one or more local editions may be created for one or more portions where fault surfaces include a dip angle that is locally greater than about 45 degrees (e.g. closer to horizontal than to vertical).

As an example, a method may optionally implement one or more types of local editing. For example, one type of local editing may act to minimize the distortions introduced by a snapping process by altering geometry of fault surfaces in real space such that distortions are minimized while the original fine-scale layering of the grid is preserved. Another type of local editing may include, for example, altering geometry in the computational space (e.g., a flattened computational space) such that distortions are minimized while the original geometry of one or more faults is preserved in real space; noting that such an approach may introduce minor deformation of a fine-scale layering of the grid.

As to selection of a distortion minimization technique, a selection may depend on, for example, a criterion such as a relative importance of vertical heterogeneity of petrophysical properties and of the fault transmissibility. For example, after an initial transform has been computed (e.g., a mapping from a real space to a computational space) and split nodes have been identified during a rasterization process, a second transform may be computed in which the fault surfaces are attracted by closest split-nodes (e.g., in real space or deformed space). During such a transform, one or more horizons that were flattened and unfaulted by moving to the computational space may be constrained to keep their geometry in the space in which the second transform is performed. Such local deformations may be, for example, computed incrementally (e.g., based on topology of a fault network discretized in a grid).

As an example, a distortion minimization process may operate as follows:
A. Intersection points corresponding to intersections between more than 2 faults are moved first to the location of the split nodes corresponding to these intersections (e.g., where the remainder of the model is deformed in such a way the total deformation is minimal).
B. The intersection lines corresponding to intersection between 2 faults (e.g., located on an intersection line) are moved in such a way that they pass through a location of the split nodes corresponding to these intersections. In such an example, an implementation may include computing an orthogonal projection of the split nodes on the corresponding fault-fault intersection line, computing the barycentric coordinates of the projection points into the segment, the segment of that line containing the point, and formulating an "attraction" constraint as a linear combination of displacements on both nodes located at the extremities of the segment. During such a process, intersection points that may have been moved (see A) may be rectified.
C. Points of faults that do not correspond to any intersection with other faults may be handled, for example, as described above such that the faults pass through grid nodes in the computational space. In such an example, points and lines that were moved (see A and B) may be rectified.

Where distortion minimization is performed, a mapping between a real space and a computational space established during a prior operation (e.g., when transforming from the real space to the computational space) may be updated, for example, by adding the increment of deformation computed during distortion minimization. In such an example, a final mapping (e.g., post-distortion minimization) may be established between the real space and a space in which (a) horizons are flattened and unfaulted; and (b) horizontal portions of the faults surfaces pass through the nodes of the grid built in the computational space.

Referring again to projecting or snapping, such a process may include identifying grid nodes belonging to disconnected cell faces and then projecting (e.g., snapping) those nodes to a fault plane that was rasterized into a grid of the computational space. Where multiple fault planes have been rasterized into a grid, such a process may identify grid nodes in association with appropriate disconnected cell faces and then project appropriate grid nodes to one or more appropriate fault planes (e.g., noting that such an approach may handle intersecting fault planes).

As an example, a projection process (e.g., projecting or snapping) may operate according to one or more rules. For example, where a fault dip is less than about 45 degrees (e.g., more horizontal), a snapping direction may be vertical; whereas, if a fault dip is greater than about 45 degrees (e.g., more vertical), a snapping direction may be horizontal. As an example, a direction of a projection may be computed in a manner such that it minimizes displacements of projected nodes, for example, while acting to avoid a gap or overlap (e.g., optionally within some tolerance) being created while moving a grid node. For example, a rule may be applied such that a node remains within an associated 2D Voronoi cell (e.g., horizontal if the node is moved horizontally, vertical if the node is moved vertically).

A projection or snapping process may result in representation of one or more faults by a relatively smooth set of connected cell faces, for example, that closely approximate geometry of input surfaces, into the grid. In such an example, altitude of grid layers (in the computational space) may remain unchanged in regions beyond the vicinity of a nearly horizontal fault (e.g., or one or more unconformity surfaces).

As to arriving at a grid such as the grid 850 of Fig. 8, a reverse mapping may be performed such that grid nodes are moved back to the real space (e.g., using a reverse transform process, the reverse of that used to move from the real space to the computational space). In such an example, a sidedness property (see, e.g., rasterization for a fault) may be used to map snapped and split nodes to an appropriate side of a fault (e.g., or faults).

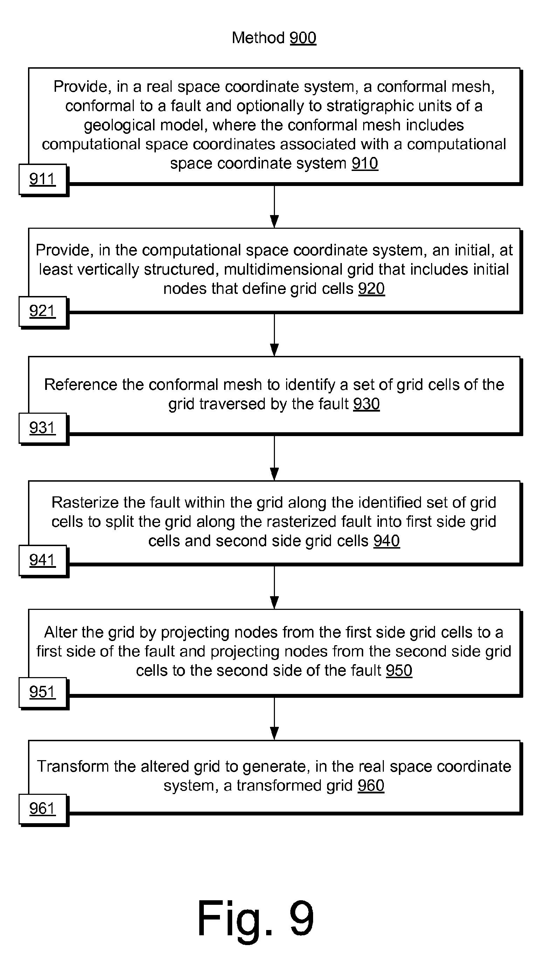

Fig. 9 shows an example of a method 900 that includes a provision block 910 for providing, in a real space coordinate system, a conformal mesh, conformal to a fault and optionally to stratigraphic units of a geological model, where the conformal mesh includes computational space coordinates associated with a computational space coordinate system; a provision block 920 for providing, in the computational space coordinate system, an initial, at least vertically structured, multidimensional grid that includes initial nodes that define grid cells; a reference block 930 for referencing the conformal mesh to identify a set of grid cells of the grid traversed by the fault; a rasterize block 940 for rasterizing the fault within the grid along the identified set of grid cells to split the grid along the rasterized fault into first side grid cells and second side grid cells; an alteration block 950 for altering the grid by projecting nodes from the first side grid cells to a first side of the fault and projecting nodes from the second side grid cells to the second side of the fault; and a transformation block 960 for transforming the altered grid to generate, in the real space coordinate system, a transformed grid.

As an example, the method 900 may generate a transformed grid such as the grid 850 of Fig. 8, which represents a fault in a real space (e.g., according to a real space coordinate system). As an example, the method 900 may generate a transformed grid such as the grid 490 of Fig. 4, which represents a fault in a real space (e.g., according to a real space coordinate system). As an example, the method 900 may output a transformed grid, for example, as shown by the output block 394 of the method 308 of Fig. 3. As an example, a transformed grid or an output grid in a real space may be received as input to an application, a framework, etc., for example, for purposes of modeling physical phenomena. As an example, results from a modeling process may be used for planning, performing, etc., operations with respect to a physical geologic environment being modeled (see, e.g., the geologic environment 150 of Fig. 1). As an example, a transformed grid or an output grid may be a structured grid, for example, a grid defined using an indexing system (see, e.g., the I, J, K indexing system of the grid cells 630 of Fig. 6). While various examples show a single fault, various other examples show multiple faults. As an example, a method may be applied to generate or output a grid that accounts for one or more faults (e.g., optionally faults of a fault network).

The method 900 is shown in Fig. 9 in association with various computer-readable media (CRM) blocks 911, 921, 931, 941, 951 and 961. Such blocks generally include instructions suitable for execution by one or more processors (or cores) to instruct a computing device or system to perform one or more actions. While various blocks are shown, a single medium may be configured with instructions to allow for, at least in part, performance of various actions of the method 900. As an example, a computer-readable medium (CRM) may be a computer-readable storage medium. As an example, the blocks 911, 921, 931, 941, 951 and 961 may be provided as one or more modules, for example, such as the one or more modules 307 of the system 301 of Fig. 3.

As an example, a method may include a performance block for performing a simulation of phenomena associated with a geologic environment using at least a portion of a transformed or output grid. As to performing a simulation, such a simulation may include interpolating geological rock types, interpolating petrophysical properties, simulating fluid flow, or other calculating (e.g., or a combination of any of the foregoing).

As to using at least a portion of a transformed or output grid, as an example, consider a flow simulation performed for a portion of such a grid "surrounding" a geological discontinuity such as a fault. In such an example, the portion of the grid may include some initial nodes of an initial grid in a computational space where a portion of those nodes may be "split" with respect to a fault, for example, where an index may be the same for a particular node yet the node has a coordinates for one side of the fault and coordinates for the other side of the fault. As an example, a sidedness property may be assigned to a node or nodes, for example, depending on which side of a fault the node or nodes belong.

In the foregoing example, providing a conformal mesh may include providing an unstructured conformal mesh, an irregular conformal mesh, or an unstructured and irregular conformal mesh. As an example, providing an initial, at least vertically structured, multidimensional grid can include providing a structured multidimensional grid aligned with the conformable horizons in the depositional domain.

In various examples, a conformal mesh can include tetrahedra, which may be space filling within a domain. As an example, nodes of an at least vertically structured multidimensional grid may define hexahedral grid cells.

As an example, a method can include providing, in a real space coordinate system, a conformal mesh, conformal to a fault of a geological model, where the conformal mesh includes computational space coordinates associated with a computational space coordinate system; providing, in the computational space coordinate system, an initial, at least vertically structured, multidimensional grid that includes initial nodes that define grid cells; referencing the conformal mesh to identify a set of grid cells of the grid traversed by the fault; rasterizing the fault within the grid along the identified set of grid cells to split the grid along the rasterized fault into first side grid cells and second side grid cells; altering the grid by projecting nodes from the first side grid cells to a first side of the fault and projecting nodes from the second side grid cells to the second side of the fault; and transforming the altered grid to generate, in the real space coordinate system, a transformed grid.

As an example, a method can include providing an initial, at least vertically structured, multidimensional grid that includes conformable horizons in the computational space coordinate system. As an example, a method may include a real space coordinate system and a computational space coordinate system that are three-dimensional coordinate systems.

As an example, a method can include performing interpolating geological rock types for at least a portion of a transformed grid, interpolating petrophysical properties for at least a portion of a transformed grid, simulating fluid flow for at least a portion of a transformed grid, etc.

As an example, a method can include performing distortion minimization prior to generation of a transformed grid, for example, to minimize distortion caused by projecting one or more nodes to a side of a fault.

As an example, a transformed grid may be a structured grid, for example, structured according to an indexing system.

As an example, a method may include providing, in a real space coordinate system, a conformal mesh conformal to faults of a geological model and performing referencing, rasterizing and altering for two or more of the faults. In such an example, the faults may be faults of a fault network.

As an example, a method can include providing, in a real space coordinate system, a conformal mesh conformal to at least one stratigraphic unit of a geological model. As an example, a conformal mesh may be conformal to two or more stratigraphic units of a geological model. As an example, a method can include referencing a conformal mesh to identify a set of grid cells that define a volume of interest, which may include at least one fault and optionally one or more stratigraphic units of a geological model.

As an example, one or more computer-readable storage media can include computer-executable instructions to instruct a computing device to: access, in a real space coordinate system, a conformal mesh, conformal to a fault of a geological model, where the conformal mesh includes computational space coordinates associated with a computational space coordinate system; create, in the computational space coordinate system, an initial, at least vertically structured, multidimensional grid that includes initial nodes that define grid cells; reference the conformal mesh to identify a set of grid cells of the grid traversed by the fault; rasterize the fault within the grid along the identified set of grid cells to split the grid along the rasterized fault into first side grid cells and second side grid cells; alter the grid by projecting nodes from the first side grid cells to a first side of the fault and projecting nodes from the second side grid cells to the second side of the fault; and transform the altered grid to generate, in the real space coordinate system, a transformed grid. In such an example, instructions may be included to instruct a computing device to perform distortion minimization prior to generation of the transformed grid to minimize distortion caused by projecting one or more of the nodes.

As an example, one or more computer-readable storage media may include instructions to instruct a computing device to: access, in a real space coordinate system, a conformal mesh, the conformal mesh conformal to faults of a geological model; reference the conformal mesh to identify sets of grid cells of the grid traversed by two or more of the faults; rasterize the two or more of the faults within the grid along the identified sets of grid cells to split the grid along the rasterized faults into, for each of the faults, first side grid cells and into second side grid cells; and alter the grid by projecting nodes, for each of the faults, from the first side grid cells to a first side of the respective fault and projecting nodes from the second side grid cells to the second side of the respective fault.

As an example, a system can include a processor; memory operatively coupled to the processor; and one or more modules stored in the memory that include instructions to instruct the processor to: access, in a real space coordinate system, a conformal mesh, conformal to a fault of a geological model, where the conformal mesh includes computational space coordinates associated with a computational space coordinate system; create, in the computational space coordinate system, an initial, at least vertically structured, multidimensional grid that includes initial nodes that define grid cells; reference the conformal mesh to identify a set of grid cells of the grid traversed by the fault; rasterize the fault within the grid along the identified set of grid cells to split the grid along the rasterized fault into first side grid cells and second side grid cells; alter the grid by projecting nodes from the first side grid cells to a first side of the fault and projecting nodes from the second side grid cells to the second side of the fault; and transform the altered grid to generate, in the real space coordinate system, a transformed grid. As an example, such a system may include instructions to instruct the processor to output the transformed grid as a structured grid, structured according to an indexing system.

As an example, a system may include instructions to instruct a processor to perform a simulation of a physical phenomenon using a transformed grid and, for example, to output results of the simulation to a display.

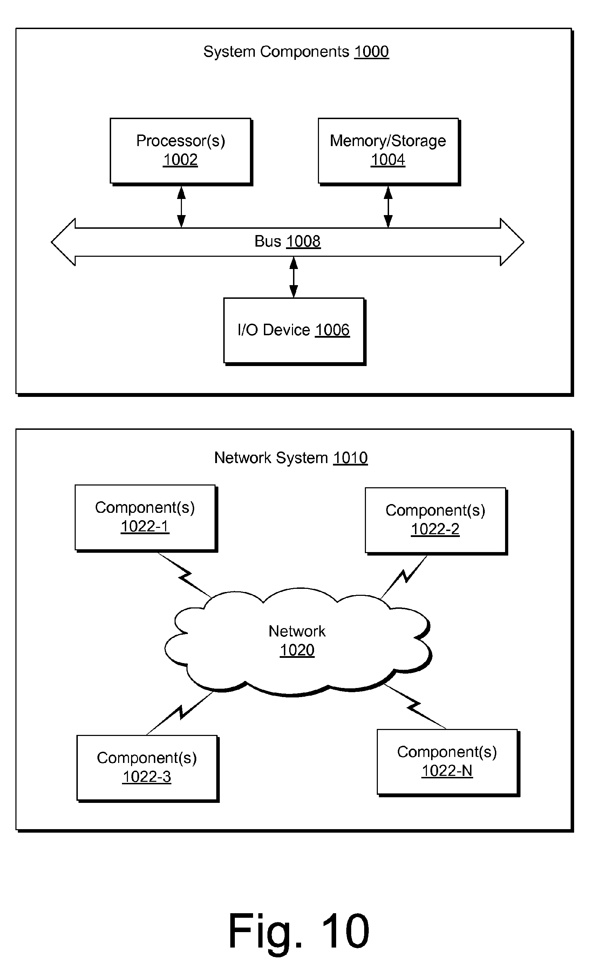

Fig. 10 shows components of an example of a computing system 1000 and an example of a networked system 1010. The system 1000 includes one or more processors 1002, memory and/or storage components 1004, one or more input and/or output devices 1006 and a bus 1008. In an example embodiment, instructions may be stored in one or more computer-readable media (e.g., memory/storage components 1004). Such instructions may be read by one or more processors (e.g., the processor(s) 1002) via a communication bus (e.g., the bus 1008), which may be wired or wireless. The one or more processors may execute such instructions to implement (wholly or in part) one or more attributes (e.g., as part of a method). A user may view output from and interact with a process via an I/O device (e.g., the device 1006). In an example embodiment, a computer-readable medium may be a storage component such as a physical memory storage device, for example, a chip, a chip on a package, a memory card, etc. (e.g., a computer-readable storage medium).

In an example embodiment, components may be distributed, such as in the network system 1010. The network system 1010 includes components 1022-1, 1022-2, 1022-3,... 1022-N. For example, the components 1022-1 may include the processor(s) 1002 while the component(s) 1022-3 may include memory accessible by the processor(s) 1002. Further, the component(s) 1002-2 may include an I/O device for display and optionally interaction with a method. The network may be or include the Internet, an intranet, a cellular network, a satellite network, etc.

As an example, a device may be a mobile device that includes one or more network interfaces for communication of information. For example, a mobile device may include a wireless network interface (e.g., operable via IEEE 802.11, ETSI GSM, BLUETOOTH®, satellite, etc.). As an example, a mobile device may include components such as a main processor, memory, a display, display graphics circuitry (e.g., optionally including touch and gesture circuitry), a SIM slot, audio/video circuitry, motion processing circuitry (e.g., accelerometer, gyroscope), wireless LAN circuitry, smart card circuitry, transmitter circuitry, GPS circuitry, and a battery. As an example, a mobile device may be configured as a cell phone, a tablet, etc. As an example, a method may be implemented (e.g., wholly or in part) using a mobile device. As an example, a system may include one or more mobile devices.

As an example, a system may be a distributed environment, for example, a so-called "cloud" environment where various devices, components, etc. interact for purposes of data storage, communications, computing, etc. As an example, a device or a system may include one or more components for communication of information via one or more of the Internet (e.g., where communication occurs via one or more Internet protocols), a cellular network, a satellite network, etc. As an example, a method may be implemented in a distributed environment (e.g., wholly or in part as a cloud-based service).

As an example, information may be input from a display (e.g., consider a touchscreen), output to a display or both. As an example, information may be output to a projector, a laser device, a printer, etc. such that the information may be viewed. As an example, information may be output stereographically or holographically. As to a printer, consider a 2D or a 3D printer. As an example, a 3D printer may include one or more substances that can be output to construct a 3D object. For example, data may be provided to a 3D printer to construct a 3D representation of a subterranean formation. As an example, layers may be constructed in 3D (e.g., horizons, etc.), geobodies constructed in 3D, etc. As an example, holes, fractures, etc., may be constructed in 3D (e.g., as positive structures, as negative structures, etc.).

Although only a few example embodiments have been described in detail above, those skilled in the art will readily appreciate that many modifications are possible in the example embodiments without materially departing from a radial bearing assembly (or assemblies) for a centrifugal pump. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112, paragraph 6 for any limitations of any of the claims herein, except for those in which the claim expressly uses the words "means for" together with an associated function.

The following documents are incorporated by reference herein:
US Patent No. 7,248,259, entitled "Three dimensional geological model construction".
US Patent Application Publication No. 2012/0022837, entitled "Smoothing of stair-stepped geometry in grids".
US Patent Application Publication No. 2008/0243454, entitled "Partitioning algorithm for building a stratigraphic grid".
Mallet, J-L, "Numerical Earth Models", EAGE Publications BV, 2008.
EP Patent Application Publication No. EP 1533754 A1, entitled "Method and apparatus for modeling multidimensional, heterogeneous structures by computer".
Lepage, F., "Génération de maillages non structures tridimensionnels pour la simulation des phénomènes physiques en geosciences", PhD dissertation, Oct. 2003, Nancy, France.
US Patent Application Publication No. 2001/0106507, entitled "Method for building a depositional space corresponding to a geological domain".
Mallet, J-L, "Space-Time Mathematical Framework for Sedimentary Geology", Mathematical Geology, 36(1), pp. 1-32.

## Claims

1. A method (900) comprising:
providing, in a real space coordinate system, a conformal mesh, conformal to a fault of a geological model, wherein the conformal mesh comprises computational space coordinates associated with a computational space coordinate system (910);
providing, in the computational space coordinate system, an initial, at least vertically structured, multidimensional grid that comprises initial nodes that define grid cells (920);
referencing the conformal mesh to identify a set of grid cells of the grid traversed by the fault (930);
rasterizing the fault within the grid along the identified set of grid cells to split the grid along the rasterized fault into first side grid cells and second side grid cells (940);
altering the grid by projecting nodes from the first side grid cells to a first side of the fault and projecting nodes from the second side grid cells to the second side of the fault (950); and
transforming the altered grid to generate, in the real space coordinate system, a transformed grid (960).

2. The method of claim 1 wherein the initial, at least vertically structured, multidimensional grid comprises conformable horizons in the computational space coordinate system.

3. The method of claim 1 wherein at least one of the real space coordinate system and the computational space coordinate system comprises a three-dimensional coordinate system.

4. The method of claim 1 further comprising performing at least one selected from a group consisting of interpolating geological rock types for at least a portion of the transformed grid, interpolating petrophysical properties for at least a portion of the transformed grid, and simulating fluid flow for at least a portion of the transformed grid.

5. The method of claim 1 further comprising performing distortion minimization with respect to the transformed grid to minimize distortion caused by projecting one or more of the nodes.

6. The method of claim 1 wherein the transformed grid comprises a structured grid, structured according to an indexing system.

7. The method of claim 1 wherein the conformal mesh further comprises a conformal mesh that is conformal to faults of the geological model and performing the referencing, the rasterizing and the altering for two or more of the faults.

8. The method of claim 7 wherein the faults comprise faults of a fault network of the geological model.

9. The method of claim 1 wherein the conformal mesh is conformal to at least one stratigraphic unit of the geological model.

10. The method of claim 9 wherein the conformal mesh is conformal to two or more stratigraphic units of the geological model.

11. The method of claim 1 further comprising referencing the conformal mesh to identify a set of grid cells that define a volume of interest.

12. One or more computer-readable storage media comprising computer-executable instructions to instruct a computing device to:
access, in a real space coordinate system, a conformal mesh, conformal to a fault of a geological model, wherein the conformal mesh comprises computational space coordinates associated with a computational space coordinate system (911);
create, in the computational space coordinate system, an initial, at least vertically structured, multidimensional grid that comprises initial nodes that define grid cells (921);
reference the conformal mesh to identify a set of grid cells of the grid traversed by the fault (931);
rasterize the fault within the grid along the identified set of grid cells to split the grid along the rasterized fault into first side grid cells and second side grid cells (941);
alter the grid by projecting nodes from the first side grid cells to a first side of the fault and projecting nodes from the second side grid cells to the second side of the fault (951); and
transform the altered grid to generate, in the real space coordinate system, a transformed grid (961).

13. The one or more computer-readable storage media of claim 12 further comprising instructions to instruct a computing device to perform distortion minimization to minimize distortion caused by projecting one or more of the nodes.

14. The one or more computer-readable media of claim 12 wherein the transformed grid comprises a structured grid, structured according to an indexing system.

15. The one or more computer-readable storage media of claim 12 further comprising instructions to instruct a computing device to:
access the conformal mesh as conformal to a plurality of faults of a geological model;
reference the conformal mesh to identify sets of grid cells of the grid traversed by two or more of the plurality of faults;
rasterize the two or more of the plurality of faults within the grid along the identified sets of grid cells to split the grid along the rasterized faults into, for each of the two or more faults, first side grid cells and into second side grid cells; and
alter the grid by projecting nodes, for each of the two or more faults, from the first side grid cells to a first side of the respective fault and projecting nodes from the second side grid cells to the second side of the respective fault.

16. The method of claim 15 wherein the faults comprise faults of a fault network of the geological model.

17. The one or more computer-readable media of claim 12 wherein the conformal mesh is conformal to at least one stratigraphic unit of the geological model.

18. A system (301) comprising:
a processor (303);
memory (304) operatively coupled to the processor; and
one or more modules (307) stored in the memory that comprises instructions stored to instruct the processor to:
access, in a real space coordinate system, a conformal mesh, conformal to a fault of a geological model, wherein the conformal mesh comprises computational space coordinates associated with a computational space coordinate system (911);
create, in the computational space coordinate system, an initial, at least vertically structured, multidimensional grid that comprises initial nodes that define grid cells (921);
reference the conformal mesh to identify a set of grid cells of the grid traversed by the fault (931);
rasterize the fault within the grid along the identified set of grid cells to split the grid along the rasterized fault into first side grid cells and second side grid cells (941);
alter the grid by projecting nodes from the first side grid cells to a first side of the fault and projecting nodes from the second side grid cells to the second side of the fault (951); and
transform the altered grid to generate, in the real space coordinate system, a transformed grid (961).

19. The system of claim 18 wherein the one or more modules comprise instructions to instruct the processor to output the transformed grid as a structured grid, structured according to an indexing system.

20. The system of claim 18 wherein the one or more modules comprise instructions to instruct the processor to perform a simulation of a physical phenomenon using the transformed grid and to output results of the simulation to a display.
